# NEUE EUROPÄISCHE PATENTSCHRIFT

(11) **EP 2 484 510 B2**
(45) Veröffentlichungstag und Bekanntmachung des Hinweises auf die Entscheidung über den Einspruch: **18.01.2023**
(45) Hinweis auf die Patenterteilung: 15.04.2015
(21) Anmeldenummer: 11153402.0
(22) Anmeldetag: 04.02.2011
(51) Int. Cl.: B29C 65/04, B29C 65/06, B29C 65/08, B29C 65/16, B29C 65/20, B65B 13/32, B29C 65/82, B29C 55/04, B29K 67/00, B29K 29/00, B29K 77/00, B29K 105/00, B29L 7/00

(54) **Verfahren zum Verschweißen von nachwachsenden Rohstoffen**
Method for welding renewable raw materials
Procédé de soudage de matières premières renouvelables

(43) Veröffentlichungstag der Anmeldung: 08.08.2012
(73) Patentinhaber: Mosca GmbH, 69429 Waldbrunn (DE)
(72) Erfinder: Eberle, Ulrich, 70794 Filderstadt (DE)
(74) Vertreter: Freischem & Partner Patentanwälte mbB

(56) Entgegenhaltungen:
- EP-A1- 1 859 916
- DE-U1- 29 520 448
- DE-U1- 29 520 449
- GB-A- 1 189 029
- JP-A- 2001 130 183
- JP-A- 2002 348 445
- JP-A- 2009 073 498
- US-A- 3 316 687
- US-A- 3 368 323

## Beschreibung

Die Erfindung betrifft ein Verfahren zum Verschweißen von monoaxial verstreckten nachwachsenden Rohstoffen sowie ein Umreifungsband, das mit dem erfindungsgemäßen Verfahren hergestellt wurde.

Mitte der 90er Jahre wurden verstreckte Produkte aus nachwachsenden Rohstoffen wie Bänder für Verpackungszwecke entwickelt, die aus biologisch vollständig abbaubaren Materialien bestanden. Diese Bänder enthielten überwiegend Stärke. Diese Bänder konnten zwar prinzipiell mit sich selbst verschweißt werden. Durch die schlechte thermische Beständigkeit von Stärke waren diese Bänder jedoch als Umreifungsband vollkommen ungeeignet, da die Schweißstelle bei der für Umreifungsbänder üblichen Zugbelastung brach. Dadurch, dass Stärke zu den Polysachariden gehört, waren diese damaligen Bänder auch nicht hydrolysebeständig und hatten eine niedrige Wärmeformbeständigkeit. Technische Stärke ist zudem üblicherweise zu einem sehr hohen Anteil mit anderen Komponenten wie Polyhydroxybuttersäure versetzt, was weitere Nachteile mit sich bringt. Die damals entwickelten Bänder waren als Umreifungsbänder hydrolyseanfällig (vgl. DE 295 20 448 U1, DE 295 20 449 U1 oder auch EP 0 799 335 B1).

Insbesondere DE 295 20 448 U1 beschreibt ein Verfahren zum Verschweißen von nachwachsenden Umreifungsbändern, wobei man zu verschweißende Flächen zumindest teilweise aus nachwachsenden Rohstoffen wie Stärke bereitstellt.

DE 196 54 030 C2 beschreibt einen textilen Aufwuchsträger, bei dem eine seilartige dreidimensionale Maschenstruktur aus Polyethylen vorgesehen ist. Dieses Polyethylen wird in Spalte 2 Zeile 35 als typisches Material von Umreifungsbändern für Verpackungsautomaten beschrieben. Zusätzlich zu diesem Material für die Maschenstruktur weist der beanspruchte Aufwuchsträger auch ein Textilgebilde auf, das als Anwuchsfläche für Mikroorganismen dienen soll. Dieses Textilgebilde kann aus abbaubaren organischen Substanzen bestehen (Spalte 1 Zeile 18). Dem damaligen Fachmann ist trotz der klar gestellten technischen Aufgabe nicht in den Sinn gekommen, auch als Material für die seilartige Maschenstruktur ein abbaubares organisches Material einzusetzen. Dies zeigt, dass es offenbar ein Vorurteil laut DE 196 54 030 C2 dagegen gab, organische abbaubare Materialien für verstreckte Produkte wie Umreifungsbänder einzusetzen.

DE 699 20 702 T2 beschreibt die Ultraschallverschweißung von Produkten aus Polymilchsäure, die nicht verstreckt sind und auch deshalb keine Anforderungen auf Zugfestigkeit erfüllen müssen.

JP 2001-130183 beschreibt einen Dokumentenhalter aus Polymilchsäure.

JP 2009-073498 beschreibt eine Tasche aus Polymilchsäure und deren Herstellung.

EP 1 859 916 A1 beschreibt ein Verfahren zur Herstellung von einer verstreckten Folie aus Polymilchsäure.

US 3,368,323 beschreibt eine Umreifungsmaschine und ein damit durchgeführtes Verfahren.

US 1,189,029 beschreibt molekular orientierte Polyamiderzeugnisse.

US 3,316,687 beschreibt ein Umreifungsverfahren.

JP 2002 348445 beschreibt ein Umreifungsband, das 10 bis 30 Gew.% Polymilchsäure enthält.

JP H11-277640 A beschreibt ein Verfahren zum Verschweißen von monoaxial verstreckten nachwachsenden Rohstoffen, wobei man
a. ein monoaxial verstrecktes Umreifungsband einsetzt und zu verschweißende Flächen zumindest teilweise aus verstreckter Polymilchsäure bereitstellt und
b. die Flächen mittels Hitze verschweißt (heat welding),
wobei die Polymilchsäure zu wenigstens 70 Gew.% aus L-Milchsäure hergestellt ist.

Aufgabe der vorliegenden Erfindung ist es daher, ein Verfahren bereitzustellen, mit dem verstreckte nachwachsende Rohstoffe so verschweißt werden können, dass die entstehenden Produkte eine hohe Zugfestigkeit aufweisen.

Die der Erfindung zugrundeliegende Aufgabe wird in einer ersten Ausführungsform gelöst durch ein Verfahren zum Verschweißen von monoaxial verstreckten nachwachsenden Rohstoffen, wobei man
a. ein monoaxial verstrecktes Umreifungsband einsetzt und zu verschweißende Flächen zumindest teilweise aus verstreckter Polymilchsäure bereitstellt und
b. die Flächen mittels Heizkeilschweißen, Reibschweißen, Laserschweißen, Hochfrequenzschweißen oder Ultraschallschweißen verschweißt,
wobei die Polymilchsäure zu wenigstens 70 Gew.% aus L-Milchsäure hergestellt ist,
und wobei man in Schritt b) eine Schweißzeit zwischen 5 Millisekunden und 1 Sekunde einstellt.

Bislang wurden aus nachwachsenden Rohstoffen praktisch keine monoaxial verstreckten Produkte wie beispielsweise Umreifungsbänder hergestellt, da es das Vorurteil gab, dass diese Materialien mechanisch nicht stabil genug und/oder beispielsweise hydrolyseanfällig wären. Zudem gab es das Vorurteil, dass bei der Verschweißung von nachwachsenden Rohstoffen eine Degradierung des Materials auftreten würde und dadurch die mechanischen Eigenschaften verschlechtert würden. Dieses Vorurteil gilt umso mehr für monoaxial verstreckte Produkte. da diese bereits mechanisch vorbelastet sind und daher das Vorurteil bestand. dass Schweißpunkte oder Schweißnähte von verstreckten Produkten aus nachwachsenden Rohstoffen praktisch als Sollbruchstelle und jedenfalls als mechanisch unbelastbar angesehen wurden. Überraschenderweise wurde nun herausgefunden, dass verstreckte nachwachsende Rohstoffe mittels Heizkeilschweißen, Reibschweißen, Laserschweißen aber vor allem mittels Ultraschallschweißen verschweißt werden können, ohne dass die mechanischen Eigenschaften wesentlich verschlechtert werden.

Man setzt in Schritt a) ein monoaxial verstrecktes Band, nämlich ein monoaxial verstrecktes Umreifungsband, und bevorzugt ein monoaxial verstrecktes Umreifungsband für die Verpackungsindustrie ein. Unabhängig hiervon ist das zu verschweißende Material vorzugsweise wenigstens 1 : 3 verstreckt. Gerade bei diesen Materialien und insbesondere bei Umreifungsbändern erfordert die Anwendung in der Regel eine hohe Zugfestigkeit. Aufgrund der vorgenannten Vorurteile wurden deshalb vor allem Umreifungsbänder aus verschweißten nachwachsenden Rohstoffen bislang nicht für möglich gehalten.

Vorzugsweise setzt man in Schritt a) extrudierte zu verschweißende Flächen ein. Im Unterschied zur Verschweißung von beispielsweise gewebten Flächen kann so eine besonders defektfreie Verschweißung realisiert werden, ohne dass sich beispielsweise an der Schweißstelle Lufteinschlüsse zwischen den zu verschweißenden Flächen bilden oder verbleiben.

Der Anteil der nachwachsenden Rohstoffe in den zu verschweißenden Flächen beträgt unabhängig voneinander vorzugsweise wenigstens 30 Gew.%, insbesondere wenigstens 50 Gew.%, ganz besonders bevorzugt wenigstens 90 Gew.%. Am meisten bevorzugt bestehen die zu verschweißenden Flächen aus einem verstreckten nachwachsenden Rohstoff.

Der nachwachsende Rohstoff ist Polymilchsäure. So können erstmals verstreckte Produkte aus nachwachsenden Rohstoffen mittels Ultraschall verschweißt werden, die im Unterschied zu den bislang bekannten stärkebasierten Materialien eine besonders hohe Hydrolysestabilität und eine hohe Wärmeformbeständigkeit aufwiesen.

Stärke hatte als Polysacharid neben der Hydrolyseanfälligkeit auch den weiteren Nachteil, dass sich beispielsweise die Paketbänder aus Stärke beim Verschweißen thermisch zersetzt haben und dadurch die Schweißpunkte quasi zu Sollbruchstellen wurden. Diese Nachteile konnten mit dieser bevorzugten Ausführungsform überwunden werden. Daher liegt der Stärkeanteil der zu verschweißenden Flächen auch vorzugsweise bei höchstens 10 Gew.%, insbesondere höchstens 5 Gew.%. Ein weiterer Nachteil der stärkebasierten und aus dem Stand der Technik bekannten Verpackungsbänder war auch, dass technische Stärke üblicherweise zu über 50 Gew.% beispielsweise aus Polyhydroxybuttersäure besteht.

Die Polymilchsäure ist vorzugsweise zu wenigstens 90 Gew.% aus L-Milchsäure hergestellt. Überraschend hat sich nämlich gezeigt, dass so ein besonders hoher Kristallisationsgrad erzielt werden konnte, sodass diese Bänder besonders gut verstreckt werden konnten. Bänder mit einem höheren Anteil an D-Säure schienen eher ein amorphes Polymer zu ergeben, das für die Verstreckung nicht so geeignet war.

Die Breite der zu verschweißenden Flächen liegt beispielsweise in einem Bereich von 3 mm bis 50 mm, insbesondere in einem Bereich von 4 mm bis 32 mm. Die Dicke der zu verschweißenden Flächen liegt beispielsweise in einem Bereich von 0,2 mm bis 2 mm, insbesondere in einem Bereich von 0,4 mm bis 1,5 mm.

Vorzugsweise liegt das Gewichtsmittel der Molmasse M_{w} des nachwachsenden Rohstoffes in einem Bereich von 20.000 g/mol bis 300.000 g/mol, insbesondere in einem Bereich von 100.000 g/mol bis 220.000 g/mol. Solche nachwachsenden Rohstoffe führen überraschenderweise zu Umreifungsbändern mit einem besonderen ausgewogenen Verhältnis zwischen geringer Sprödigkeit und hoher Zugfestigkeit.

Übliche Zusatzstoffe, Additive und sonstige Modifier können beispielsweise zu 0 Gew.% bis 10 Gew.%, insbesondere zu 0,5 Gew.% bis 2 Gew.% enthalten sein.

Vorzugsweise beträgt der Fasergehalt des Materials der Flächen höchstens 10 Gew.%, insbesondere höchstens 1 Gew.%. Ganz besonders bevorzugt enthält das erfindungsgemäße Umreifungsband keine Fasern. Hierdurch können Inhomogenitäten der Eigenschaften insbesondere bei der Verarbeitung von Fasern gemeinsam mit thermoplastischen Materialien beispielsweise durch Lufteinschlüsse vermieden werden.

Erfindungsgemäß stellt man in Schritt b) eine Schweißzeit zwischen 5 Millisekunden Sekunden und 1 Sekunde, bevorzugt zwischen 100 bis 400 Millisekunden ein. Unabhängig davon stellt man diesen Schritt b) vorzugsweise eine Abkühlzeit zwischen 0 Sekunden und 3 Sekunden, insbesondere zwischen 0,2 und 0,5 Sekunden ein. Als besonders bevorzugt hat sich eine Kombination der bevorzugten Schweißzeit und der bevorzugten Abkühlzeit herausgestellt. Im Übrigen wird das Schweißverfahren mit den sonst üblichen Parametern durchgeführt.

Vorteilhafterweise wählt man in Schritt b) bei der Verschweißung die Sonotrode so breit wie das Schweißgut. Auch kann man in Schritt b) bei der Verschweißung eine Sonotrode mit einer Länge im Bereich von 1 bis 100 mm, insbesondere 5 mm bis 30 mm einsetzen.

Vorteilhafterweise drückt man in Schritt b) beim Verschweißen die zu verschweißenden Flächen gegen eine Gegenplatte, wobei die gegenüberliegenden Oberflächen der Sonotrode und der Gegenplatte jeweils einen mit Vorsprüngen versehenen Teilabschnitt und einen glatten Teilabschnitt aufweisen. So kann beispielsweise die Oberfläche der Sonotrode geriffelt sein, während die Oberfläche der Gegenplatte glatt ist. Es wurde überraschend festgestellt, dass dadurch eine geringere Verformung der zu verschweißenden Flächen im Bereich der Schweißung auftritt. Durch die geringere Verformung der zu verschweißenden Flächen im Bereich der Schweißung, in den anschließend beispielsweise Zugkraft eingeleitet wird, erhält die Schweißung insgesamt eine höhere Festigkeit. Außerdem wurde festgestellt, dass die Festigkeitswerte von einer Schweißung zur anderen weniger streuen, sodass mit dem erfindungsgemäß bevorzugten Verfahren eine Vielzahl von Schweißungen mit relativ hoher und gleichbleibender Festigkeit erzeugt werden kann.

In einer weiteren Ausführungsform wird die der Erfindung zugrundeliegende Aufgabe gelöst durch ein nach dem erfindungsgemäßen Verfahren hergestelltes Umreifungsband, dadurch gekennzeichnet, dass die Reißfestigkeit wenigstens 5 N/mm², insbesondere wenigstens 100 N/mm² gemessen nach DIN 53504 beträgt.

Vorzugsweise ist die Reißdehnung nach DIN 53504 höchstens 100 %. besonders bevorzugt höchstens 50%. ganz besonders bevorzugt höchstens 20%.

### Ausführungsbeispiel

Granulat von Polymilchsäure (PLA Polymer 4032D der Firma NatureWorks), welches eine L-Polymilchsäure war, wurde aufgeschmolzen und bei 220 °C durch eine Schlitzdüse mit einem Einschneckenextruder extrudiert. Das Extrudat wurde in ein Wasserbad mit einer Temperatur von 50 °C geleitet und anschließend in Luft 1 : 4 verstreckt. Anschließend wurde das entstandene Band in Luft fixiert und abgekühlt und dann aufgespult. Mit diesem entstandenen Umreifungsband wurde anschließend testweise ein üblicher Umzugskarton umreift, indem das Band um den Umzugskarton herumgelegt wurde, sodass sich beide Enden des Umreifungsbandes 2 cm überlappten. Die überlappenden Enden des Umreifungsbandes wurden mittels Ultraschallschweißen miteinander verschweißt. Die Schweißzeit wurde auf 256 Millisekunden eingestellt. Die Abkühlzeit wurde auf 1 Sekunde eingestellt. Im Übrigen wurden die Parameter wie sonst üblich gewählt. Die Sonotrode hatte eine Breite von 4 mm und eine Länge von 15 mm. Die Oberfläche war geriffelt, wobei die Breite der Riffelung 1 mm und die Tiefe der Riffelung ebenfalls 1 mm. Die Vorsprünge der Riffelungen waren abgerundet. Die Gegenplatte war glatt. Insgesamt wurden die Herstellungsparameter und insbesondere die Dicke und Breite der Schlitzdüse beim Extrudieren so gewählt, dass nach dem Verstrecken ein Umreifungsband mit einer Dicke von 0,7 mm und einer Breite von 12 mm entstand.

Das erfindungsgemäß hergestellte Umreifungsband hatte eine Reißfestigkeit von mehr als 145 N/mm² (gemessen nach DIN 53504). Die Reißdehnung betrug weniger als 20 % (nach DIN 53504). Es konnte keine Degradierung durch Hydrolyse beobachtet werden. Das erhaltene Umreifungsband war hydrolysestabil. Weiterhin war das erhaltene Umreifungsband bis wenigstens 70 °C wärmeformbeständig.

Die Reißfestigkeit der Verschweißung der beiden Bänder war größer als 110 N/mm² (nach DIN 53504). Die Reißdehnung war größer als 1% (nach DIN 53504) weniger als 20 % (nach DIN 53504).

## Patentansprüche

1. Verfahren zum Verschweißen von monoaxial verstreckten nachwachsenden Rohstoffen, wobei man
a. ein monoaxial verstrecktes Umreifungsband einsetzt und zu verschweißende Flächen zumindest teilweise aus verstreckter Polymilchsäure bereitstellt und
b. die Flächen mittels Heizkeilschweißen. Reibschweißen, Laserschweißen, Hochfrequenzschweißen oder Ultraschallschweißen verschweißt,
wobei die Polymilchsäure zu wenigstens 70 Gew.% aus L-Milchsäure hergestellt ist und wobei man in Schritt b) eine Schweißzeit zwischen 5 Millisekunden und 1 Sekunde einstellt.

2. Verfahren gemäß Anspruch 1, **dadurch gekennzeichnet, dass** man eine Polymilchsäure einsetzt, die zu wenigstens 90 Gew.% aus L-Milchsäure hergestellt ist.

3. Verfahren gemäß einem der Ansprüche 1 bis 2. **dadurch gekennzeichnet, dass** man in Schritt b) eine Abkühlzeit zwischen 0 und 3 Sekunden einstellt.

## Claims

1. Method for welding uniaxially stretched renewable raw materials,
wherein
a. a uniaxially stretched strapping tape is used and surfaces to be welded are at least partially provided from stretched poly lactic acid; and
b. the surfaces are welded using heated wedge welding, friction welding, laser welding, high frequency welding or ultrasonic welding,
wherein the poly lactic acid is made at least of 70 wt.% L-lactic acid and wherein in step b) a welding time between 5 milliseconds and 1 second is set.

2. Method according to claim 1, **characterized in that** a poly lactic acid is used which is made at least of 90 wt.% L-lactic acid.

3. Method according to one of claims 1 to 2, **characterized in that** a cooling time between 0 and 3 seconds is set in step b).

## Revendications

1. Procédé pour souder des matières premières renouvelables étirées uniaxialement, dans lequel :
a) une bande de cerclage étirée uniaxialement est déployée et des surfaces de soudage au moins partiellement avec de l'acide polylactique étiré sont préparées, et
b) les surfaces sont soudées par soudage à chaud, soudage par frottement, soudage au laser, soudage haute fréquence ou soudage par ultrasons,
dans lequel l'acide polylactique est constitué d'au moins 70 % en poids d'acide L-lactique et dans lequel à l'étape b), un temps de soudage d'une durée comprise entre 5 millisecondes et 1 seconde survient.

2. Procédé selon la revendication 1, **caractérisé par** le déployement d'un acide polylactique, constitué au minimum de 90 % en poids d'acide L-lactique.

3. Procédé selon la revendication 1 ou 2, **caractérisé en ce qu'**à l'étape b), un temps de refroidissement d'une durée comprise entre 0 et 3 secondes survient.
